# EUROPEAN PATENT APPLICATION

(11) **EP 1 408 417 A1**
(43) Date of publication of application: **14.04.2004**
(21) Application number: 02017329.0
(22) Date of filing: 01.08.2002
(51) Int. Cl.: G06F 15/173

(54) **Efficient messaging in a parallel processing system**

(71) Applicant: Fujitsu Siemens Computers, LLC, Milpitas, CA 95035 (US)
(72) Inventor: Myers, Mark S., Portland, 97219 Oregon (US)
(74) Representative: Epping Hermann & Fischer

(57) **Abstract**

The present invention, generally speaking, provides an efficient method of sending a long message from a first compute node to a second compute node across an interconnection network. In the first compute node, a message header field is set to a predetermined value and the message is sent. In the second compute node, the message header is received and processed, and a memory location is read in accordance with the contents of a base address register and an index register. Using Direct Memory Access, the message is then stored in memory at a storage address determined in accordance with the contents of the memory location. Preferably, the storage address is aligned on a memory page boundary.

## Description

### BACKGROUND OF THE INVENTION

### 1. Field of the Invention

The present invention relates to computer interfaces, particularly to interfaces for interfacing a compute node to a mesh network.

### 2. State of the Art

Massively Parallel Processing (MPP) systems are becoming increasingly widespread. In an MPP system, a large number of "compute nodes" are placed in communications with one another through a "mesh fabric," i.e., a collection of interconnections that typically allows any compute node to communicate with any other compute node. MPP systems have been used to solve computational problems once thought to be uncomputable even using supercomputers. MPP systems are also being applied successfully in the area of high-availability computing.

Clearly, much of the engineering challenge in MPP systems resides in 1) programming a large number of independent compute nodes to work together; and 2) interfacing the compute nodes to the mesh.

As computing becomes increasing media-rich, the size of messages to be transferred between nodes increases. In the prior art, a DMA message type was provided to allow a long message to be placed directly into memory of a receiving node. A DMA message required a setup sequence to be executed between the sending node and the receiving node. The setup sequence increases traffic and impacts efficiency.

There is a particular need in the art for an interface circuit that provides for DMA-like messaging without requiring a preceding setup sequence. The present invention addresses this need.

### SUMMARY OF THE INVENTION

The present invention, generally speaking, provides an efficient method of sending a long message from a first compute node to a second compute node across an interconnection network. In the first compute node, a message header field is set to a predetermined value and the message is sent. In the second compute node, the message header is received and processed, and a memory location is read in accordance with the contents of a base address register and an index register. Using Direct Memory Access, the message is then stored in memory at a storage address determined in accordance with the contents of the memory location. Preferably, the storage address is aligned on a memory page boundary.

### BRIEF DESCRIPTION OF THE DRAWING

The present invention may be further understood from the following description in conjunction with the appended drawing. In the drawing:
Figure 1 is a block diagram of a node of an MPP system in which the present interface circuit may be used;
Figure 2 is a block diagram of the interface circuit of Figure 1;
Figure 3 is a block diagram of the transmit logic of Figure 2;
Figure 4 is a block diagram of the receive logic of Figure 2; and
Figure 5 is a diagram illustrating address computation for DMA and
Aligned message types.

### DETAILED DESCRIPTION OF THE PREFERRED EMBODIMENTS

In the present detailed description, the following definitions are used.
Mesh network: A network that routes messages between nodes. The network can be in the form of a Mesh, torus or another routing connection.
Fabric: Another name for the routing network that routes messages between nodes.
Mesh interface: Logic between first bus (e.g., Avalanche bus) logic and second bus (e.g., PCI bus) logic and the fabric.
Torus Router (TROUT) interface: Logic taken from a Torus Router (TROUT) and used in the present Mesh interface circuit, or Mesh Interface Adapter (MIA), to interface between the TROUT and the MIA. The TROUT and the MIA may both take the form of ASICs.
Mesh channel: Name of a remote channel that may be used to interface different MPP systems.
EDC: Error Detection and Correction

The present messaging techniques are implemented in part by a Mesh Interface Adapter (MIA). The MIA is designed for use in a Mesh MPP system to provide an interface between a first bus (e.g, the Avalanche bus), a second bus (e.g., the PCI bus) and the Mesh fabric.

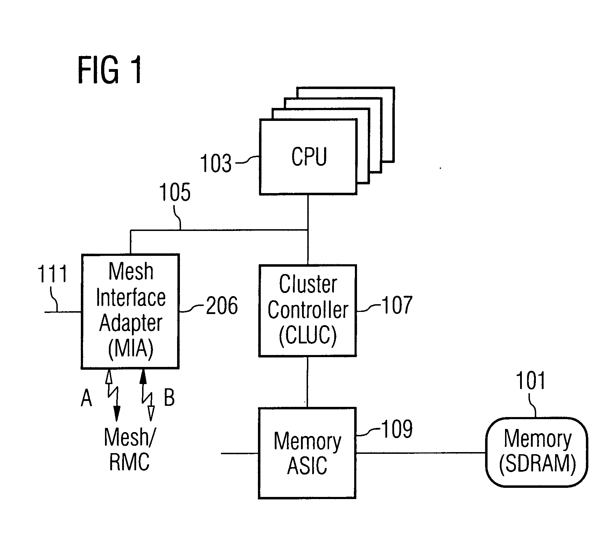

The MIA can be used in different configurations. Referring to Figure 1, in one configuration both memory 101 and one or more CPUs 103 reside (in relation to an MIA 200) on a bus 105. The bus 105 may be for example, the Avalanche bus used in conjunction with the MIPS R10000 processor. A Cluster Controller (CLUC) ASIC 107 acts as the Avalanche bus Cluster Controller and, along with a memory controller ASIC 109, provides accesses to and from a memory array 101 such as an SDRAM memory array. The MIA 200 is controlled via the bus 105, to and from which all Mesh traffic flows exclusively. The MIA 200 also allows the transfer of I/O data between the bus 105 and a bus 111, but no Mesh traffic is directed at the bus 111. The bus 111 may be the PCI bus, for example. [DO MIA AND MAUI CONNECT TO THE SAME SAME PCI BUS OR DIFFERENT PCI BUSSES?]

The MIA provides two independent but identical Mesh channel connections. A Mesh channel connection consist of a transmit (Tx) and receive (Rx) pair. The two Mesh channels are designated in Figure 1 as channels A and B. Each Mesh channel is designed to directly connect with a processor port interface of the TROUT ASIC (not shown). The TROUT ASIC may have a similar architecture as described in U.S. Patents 4,993,993 and 5,105,424, both of which are incorporated herein by reference. In an exemplary embodiment, each transmit and receive interface consists of 20-bits (16-bits of data, 2 parity bits, one control bit, and one clock).

Each interface of the MIA may be clocked independently, causing the MIA to have potentially five distinct asynchronous clock boundaries. The five asynchronous boundaries are:
1. Bus 105
2. Bus 111
3. Mesh Transmit, both channels A and B
4. Mesh Receive channel A
5. Mesh Receive channel B

Dual port RAM arrays may be used to act as the asynchronous boundary between different clock domains. To do so, data is written into the RAM at one frequency and read from the RAM at a different frequency. Synchronized handshake control signals are preferably used to inform the receiving control block that an entry has been written into the RAM, while the sending control block is informed when the entry has been removed from the RAM. In an exemplary embodiment, the MIA registers all incoming signals immediately after the input buffer while all output signal are registered before being driven out.

To facilitate access, all internal MIA registers may be located in the PCI bus clock domain. This allows all register accesses to be identical for each clock domain and prevents the register from having to also be dual ported. These registers come up in a default state but are typically initialized by software before any operations begins through the MIA. Of particular interest in relation to the present invention are the following registers, the function of which is described hereinafter: an Aligned Index Register, a DMA Index Register and a Write Protection Array (WPA) Address Register.

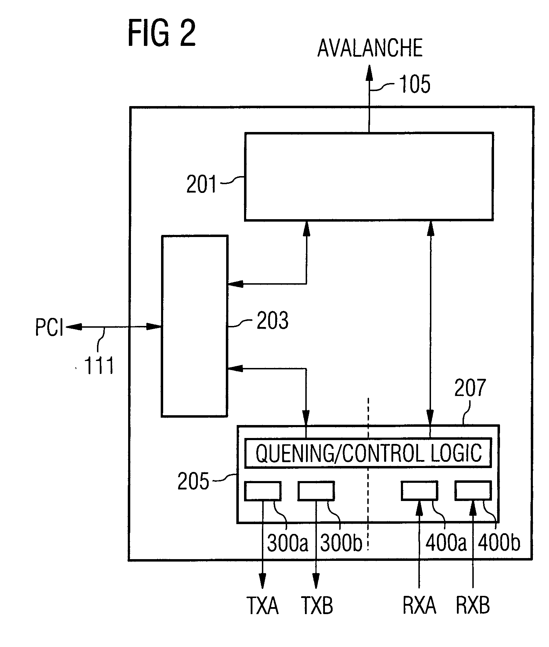

Referring to Figure 2, a block diagram of the MIA is shown. The MIA includes a first bus interface portion 201 for interfacing to a first bus such as the Avalanche bus, a second bus interface portion 203 for interfacing to a second bus such as the PCI bus, and a third interface portion including a transmit portion 205 and a receive portion 207 for interfacing to the Mesh, together with interconnection between the various interface portions. The transmit portion 205 and the receive portion 207 will be described in greater detail hereinafter.

The MIA Mesh interface logic (205, 207) allows the MIA to send and receive messages over the Mesh fabric. The Mesh interface logic has two separate receive ports and two separate transmit ports used to connect to two separate fabrics. The two fabrics can either be a primary fabric with a redundant backup, or they can both be primary fabrics sharing the load. All four ports have separate logic and can operate simultaneously.

In an exemplary embodiment, the Mesh interface logic has 16 bit wide data paths. The two transmit interfaces are driven by the same clock, whereas the receive interfaces are driven by separate input clocks coming from their transmit sources.

The MIA Mesh hardware ports can be used to interface to a Remote Mesh Channel (RMC) or a Fiber Mesh Channel (FMC). The connection to a RMC is done by adding drivers and receivers to the existing Mesh port signals. The connection to the FMC requires external logic that converts the Mesh protocol to the Fiber Channel protocol.

The two transmit interfaces 300a and 300b are controlled by Transmit Request Blocks (TRBs) that define the message type, supply the Mesh network address and message header bytes, and provide pointers to any data bytes in the message. In normal operation the node uses both Mesh networks to balance the load on each network. If a network failure is detected a node will route around the failed network and use the other network. Each transmit port works independent of the other. In an exemplary embodiment, each transmit interface has a 512 byte FIFO (64 words deep by 72 bits wide) used to store fetched data from memory before it is sent out on the Mesh.

The two receive ports 400a and 400b operate independently and can receive messages simultaneously. After receiving the header from the network it is analyzed to determine what type of message it is. If there is data with the header then it is stored into local DRAM as it is received from the fabric. The header and status are then stored in memory in Receive Message Blocks (RMBs). In an exemplary embodiment, each receive interface has a 512 byte FIFO used to store incoming data before it is analyzed or stored in memory.

Each transmit port and each receive port interfaces independently with the Avalanche bus logic and the PCI interface logic to access local memory, by issuing read requests or write requests from the other buses control logic [EXPLAIN]. In an exemplary embodiment, the Mesh interface logic can support either a 64 byte or a 128 byte cache line size.

In an exemplary embodiment, there are four types of messages:
- Hardware control messages
- Mailbox messages
- DMA write messages
- Aligned write messages

Hardware control messages allow nodes on the Mesh network to send reset and interrupt commands to other nodes. These messages consist of a message header and message checksum and do not contain any data bytes. Two hardware message resets―a hard reset and a soft reset―and one hardware message interrupt are supported. This interrupt is a maskable interrupt used to interrupt the processor.

Mailbox messages allow nodes to send unsolicited messages to each other. They are used to send commands to other nodes and send responses when commands are completed. When a node receives a mailbox message it saves it in a mailbox buffer in the nodes DRAM memory. Each mailbox message can also cause an optional processor interrupt.

DMA write messages allow a node on the Mesh network to write data buffers in another node. This is used to transfer large blocks of data between nodes without having the processor copy the data from the mailbox buffer to the actual data buffer. This would typically be used for things like disk reads and writes. The receiving node controls how DMA writes are done to its memory by using a DMA Write Protection Array (WPA) and DMA write keys. Each DMA write message can also cause an optional processor interrupt.

The Aligned message is used to send data without being required to setup the receiving node before transfer. The receiving node has a data buffer in local memory, along with an index register in the MIA pointing to the next location available in local memory (the address is always on a page boundary). When this message is received the data is sent to the memory buffer address found by the WPA (Write Pointer Array) register base address and the Aligned index register. Each Aligned message can also cause an optional processor interrupt.

In accordance with an exemplary embodiment, the MIA Mesh logic and interface is capable of supporting four different page sizes. Size is initialized at the beginning of operation. The sizes supported are 4 KBytes, 8 KBytes, 16 KBytes and 32 KBytes. Any message can have less than a page size of data sent, but the size is assumed to be a multiple of four bytes. For mailbox messages the size can range from zero bytes to one page of bytes. For DMA and Aligned messages the size ranges from four bytes to one page of bytes. For the MIA a flit is two bytes of data. The MIA transmit and receive channels have the capability to loopback data sent out to the transmit port back to the receive channel without leaving the MIA. This is done by setting a loopback bit in the TROUT portion of the receive channel logic and insuring that there is only one address flit.

The transmit interface 300 is controlled by a Transmit Request Ring (TRR) in the node's DRAM memory. In an exemplary embodiment, the TRR can range in size from 512 bytes to 16 MBytes and must be Aligned on a TRR size boundary. The TRR is divided into Transmit Request Blocks (TRBs) and each TRB is 128 bytes long. The Mesh transmit interface 300 views the TRR as a circular ring of TRBs.

Two registers are used to access the TRR buffer. One contains the address of the current TRB, the other contains the size of the TRR. Software puts message header data into the TRR and increments the request count. The transmit logic sends messages when the request count is non-zero. The transmit logic increments to the next TRB and decrements the request count after each message is sent. The TRR size register is used to know when to roll the address back to the beginning of the TRR buffer. Software uses the TRR size register and the request count register to determine when the TRR is full and when to roll the address to the lowest physical address.

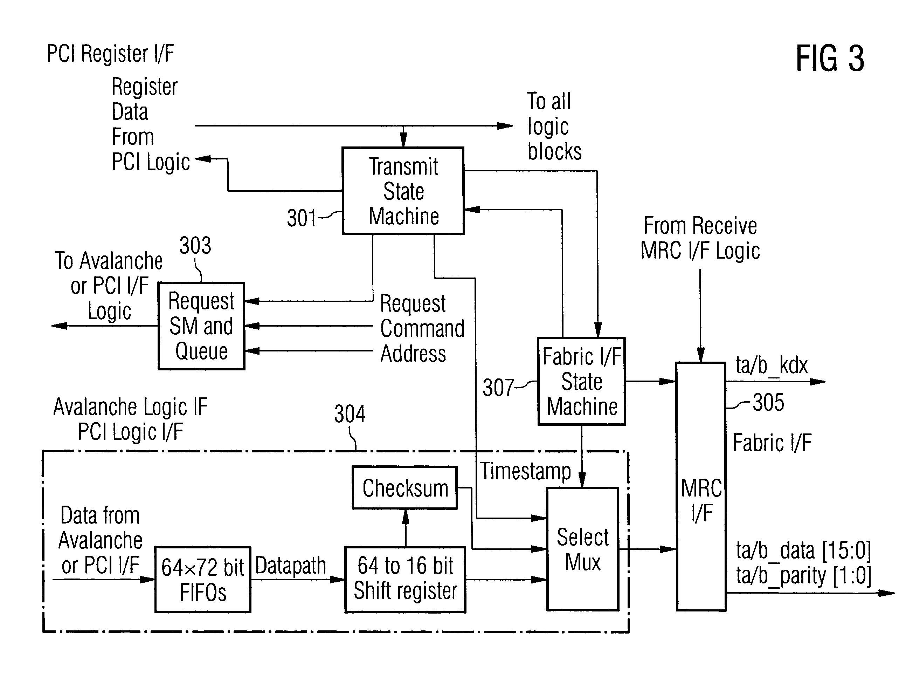

Referring to Figure 3, the transmit logic has several state machines and control logic needed to examine registers to begin operations, fetch data from memory and send the message out onto the Mesh network. A transmit state machine 301 monitors the MIA control registers and starts the other state machines when there are messages to be sent. A request state machine 303 requests header data when there is a message to be sent and requests data when data is needed for a message. Datapath logic 304 is used to route the data from the response queues to MRC interface logic 305. It also injects checksums and tail flit data when selected by a fabric state machine 307. The fabric state machine 307 sends available data to the MRC interface logic 305 when the fabric is ready to receive data.

The transmit logic can be reset by clearing a transmit enable bit in an MIA control register. The transmit logic can be reset at any time (e.g. after any of the transmit errors) by clearing this bit and then setting it again.

The definition of the TRB is shown below in Table 1. In an exemplary embodiment, the TRB is 128 bytes long. The first 64 bytes contain data that is sent to the receiving node. The only bytes in the first 64 bytes of the TRB that are used by the transmit logic are the address flits and the transmit length. The last 64 bytes (which are not sent to the receiving node) contain addresses and data lengths used to fetch data to be sent with the message. The first 16 bytes of the TRB are used to route the message to the receiving node. (Variations in the number of routing address flits needed are handled by stripping off any zero address flits at the beginning of the TRB and sending the rest of the address flits to the fabric). The address flits are sent out in order, 1 to 6. Address flits 1 through 5 could be zero or real address flits depending on the destination. If only one address flit is needed to route the message then address flits 1 through 5 are zero. Address flit 6 is never zero. In an exemplary embodiment, address flit 6 is duplicated in hardware and sent to the fabric a second time, right after the first address 6. It is not used to route but is used by the receiving node to determine which node the message came from.

The transmit length represents the number of bytes to be sent out with the message. In an exemplary embodiment, it is required to be on a four byte boundary. The transmit length is stored as it is going to the fabric and is used to determine how many data flits to send to the fabric. (The transmit length should not be greater than the page size.)

**Table 1:**

| Address | Byte 0 Bit 63 | Byte 1 | Byte 2 | Byte 3 | Byte 4 | Byte 5 | Byte 6 | Byte 7 Bit 0 |
|---|---|---|---|---|---|---|---|---|
| 0x00 to 0x07 | Reserved (must be zero) | | | | Address 2 | | Address 1 | |
| 0x08 to 0x0f | Address 4 | | Address 3 | | Address 6 | | Address 5 | |
| 0x10 to 0x17 | Transmit Length | | Reserved | Message type | Source address (software defined) | | | |
| 0x18 to 0x1f | DMA index/Harware partition^{a} | | | | DMA write key^{b} | | | |
| 0x20 to 0x27 | Software Defined 0 | | | | Software Defined 1 | | | |
| 0x28 to 0x2f | Software Defined 2 | | | | Software Defined 3 | | | |
| 0x30 to 0x37 | Software Defined 4 | | | | Software Defined 5 | | | |
| 0x38 to 0x3f | Software Defined 6 | | | | Software Defined 7 | | | |
| 0x40 to 0x47 | Length | | Reserved | Data buffer address 1 | | | | |
| 0x48 to 0x4f | Length | | Reserved | Data buffer address 2 | | | | |
| 0x50 to 0x57 | Length | | Reserved | Data buffer address 3 | | | | |
| 0x58 to 0x5f | Length | | Reserved | Data buffer address 4 | | | | |
| 0x60 to 0x67 | Length | | Reserved | Data buffer address 5 | | | | |
| 0x68 to 0x6f | Length | | Reserved | Data buffer address 6 | | | | |
| 0x70 to 0x77 | Length | | Reserved | Data buffer address 7 | | | | |
| 0x78 to 0x7f | Length | | Reserved | Data buffer address 8 | | | | |

| | | | | | | | | |
|---|---|---|---|---|---|---|---|---|
| a. Used for both DMA messages and harware control messages. The DMA index is used by the receiving node to process DMA messages. | | | | | | | | |
| b. Used by the receiving node for aligned messages and DMA messages. | | | | | | | | |

The definitions of message types in an exemplary embodiment are shown in Table 2.

**Table 2:**

| Message Type | Hex |
|---|---|
| Hardware message hard reset | 14 |
| Hardware message soft reset | 15 |
| Hardware message maskable interrupt | 16 |
| Mailbox message | 41 |
| Mailbox message with interrupt | c1 |
| Aligned | 49 |
| Aligned message with interrupt | c9 |
| DMA message | 61 |
| DMA message with interrupt | e1 |

The header checksum is calculated in the MIA. The header checksum is calculated by adding the header data (all of the shaded area in the TRB) 32 bits at a time. Any carry is added into the next addition of the accumulated value (32 bits) and the next 32 bits of header data. The carry after the last addition of the accumulated value and the last 32 bits of header data is also added to the final accumulated header checksum. The one's complement of the accumulated value is formed by inverting the bits, yielding the final header checksum. The header checksum is inserted in the data flow to the mesh network following the last software defined field.

To check for correct header checksums the receiver simply adds the same header data, including the header checksum, for an incoming message (and any previous carry bits). All of the bits of the final value should be 1 except for the LSB. Its value depends on the carry from the last addition. The LSB is exclusive ORed with the last carry. This value should be 1. [IS THIS CHECKSUM STUFF NIFTY OR CONVENTIONAL?]

The last 64 bytes contain addresses and data lengths for data that might be sent to the fabric. These addresses and lengths are used to gather data from local memory to be sent to the fabric. As long as there is a non-zero length in any of the length fields and the sent data count has not reached the transmit length, data is fetched from memory. If all eight addresses have zero lengths then no data is sent. In an exemplary embodiment, the source addresses must be on a 64 byte boundary if the cache line size is 64, and must be on a 128 byte boundary if the cache line size is 128. The gather lengths must be a multiple of 4 bytes. (The lengths for the gather addresses can be more than the transmit length without error, but if the gather lengths are less than the transmit length an error is generated.)

The MIA transmit logic is designed to allow the header checksum to be included in the TRB. In order to send out a TRB with the header checksum included it is necessary to set the appropriate bit of the Transmit Diagnostic Control register so as to redefine the first half of the TRB as shown in Table 3 below. In this state, the MIA transmit logic allows the message checksum to come from the data buffer and not be calculated by the hardware. In order to send out a message with the message checksum as the last four bytes of the data buffer, the appropriate bit of the Transmit Diagnostic Control register is set, and the pre-calculated checksum is included in the next four bytes following the data for the message. For example, if the last four bytes of data came from bytes 4 though 7 then the checksum will appear in bytes 0 through 3 of the following word; if the last four bytes of the data is in bytes 0 thru 3 then the checksum will appear in bytes 4 thru 7 of that word.

**Table 3:**

| Address | Byte 0 Bit 63 | Byte 1 | Byte 2 | Byte 3 | Byte 4 | Byte 5 | Byte 6 | Byte 7 Bit 0 |
|---|---|---|---|---|---|---|---|---|
| 0x00 to 0x07 | Address 2 | | Address 1 | | Address 4 | | Address 3 | |
| 0x08 to 0x0f | Address 6 | | Address 5 | | Transmit Length | | Reserved | Message type |
| 0x10 to 0x17 | Source address (software defined) | | | | DMA index/Harware partition | | | |
| 0x18 to 0x1f | DMA write key | | | | Header checksum | | | |
| 0x20 to 0x27 | Software Defined 0 | | | | Software Defined 1 | | | |
| 0x28 to 0x2f | Software Defined 2 | | | | Software Defined 3 | | | |
| 0x30 to 0x37 | Software Defined 4 | | | | Software Defined 5 | | | |
| 0x38 to 0x3f | Software Defined 6 | | | | Software Defined 7 | | | |

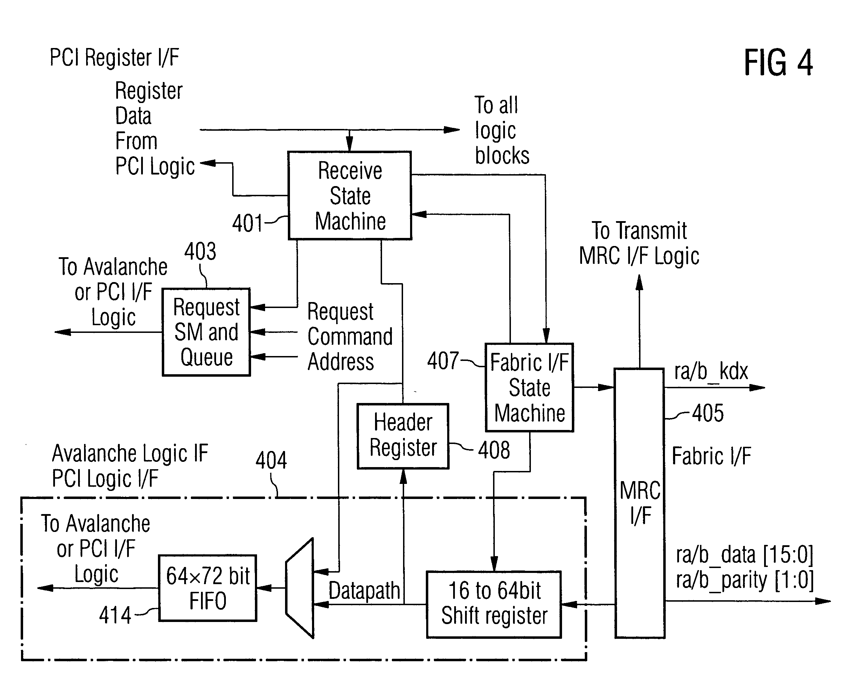

Referring to Figure 4, the receive interface 400 allows the node to receive messages from the fabric network. The receive interface 400 has state machines and control logic necessary to receive messages and store data in the node's DRAM memory. A fabric state machine 407 receives messages from the fabric via MRC logic 405. After placing the message header into a temporary header queue 408, a receive state machine 401 is started in order to analyze the header and begin interfacing with memory. Datapath logic 404 is used to combine incoming flits into 64 bit words and store them into a data queue 414. Whenever there is data in the queues to be sent to memory the request state machine 403 will request data writes to memory, storing the incoming data into the appropriate buffer. After all data has been stored in memory the receive logic 207 zeros out the next RMB in the mailbox buffer and writes the current RMB, ready for software to process the message.

The receive logic 207 can be reset by clearing the Receive Enable bit in the MIA control register and then setting the bit. The receive logic is designed to continue to receive messages from the fabric, even if it is disabled. It discards incoming messages so it will not hang the fabric.

The definition of the RMB is shown in Table 4. The first 64 bytes of the RMB is data from the TRB header and a transmit timestamp sent by the sending node. The second 64 bytes of the RMB is status added by the receive logic.

**Table 4:**

| Address | Byte 0 Bit 63 | Byte 1 | Byte 2 | Byte 3 | Byte 4 | Byte 5 | Byte 6 | Byte 7 Byte 0 |
|---|---|---|---|---|---|---|---|---|
| 0x00 to 0x07 | Reserved (not received) | | Address 6 | | Transmit timestamp | | | |
| 0x08 to 0x0f | Transmit Length | | Reserved | Message type | Source address (software defined) | | | |
| 0x10 to 0x17 | DMA index/Harware partition | | | | DMA write key | | | |
| 0x18 to 0x1f | Software Defined 0 | | | | Software Defined 1 | | | |
| 0x20 to 0x27 | Software Defined 2 | | | | Software Defined 3 | | | |
| 0x28 to 0x2f | Software Defined 4 | | | | Software Defined 5 | | | |
| 0x30 to 0x37 | Software Defined 6 | | | | Software Defined 7 | | | |
| 0x38 to 0x3f | Header checksum | | | | Reserved (not received) | | | |
| 0x40 to 0x47 | Receive status | RMB errors^{a} | | | Receive length^{b} | | Always zeros | |
| 0x48 to 0x4f | Receive timestamp^{c} | | | | Done timestamp^{d} | | | |
| 0x50 to 0x57 | Always zeros | | Address of the next RMB^{e} | | | | | |
| 0x58 to 0x5f | Always zeros | | Address of WPA data used for DMA or aligned messages^{f} | | | | | |
| 0x60 to 0x67 | Always zeros | | Address of first data stored^{g} | | | | | |
| 0x68 to 0x6f | Valid bit, sequence number and address received from address in WPA for aligned or DMA messages^{h} | | | | | | | |
| 0x70 to 0x77 | Message checksumⁱ | | | | Always zeros | | Tail flit data | |
| 0x78 to 0x7f | Always zeros | | | | Always zeros | | | |

| | | | | | | | | |
|---|---|---|---|---|---|---|---|---|
| a. Encodes any erros that might have occurred. | | | | | | | | |
| b. The number of data bytes received in the message; should be the same as the transmit length. | | | | | | | | |
| c. When message was received. | | | | | | | | |
| d. When receive logic finished processing message. | | | | | | | | |
| e. If this is not the last message in this mailbox. | | | | | | | | |
| f. Valid only if Aligned or DMA write message. | | | | | | | | |
| g. That is, address of the first data written to memory. | | | | | | | | |
| h. 64-bit word fetched from WPA buffer. | | | | | | | | |
| i. For software use, if needed. j. For software use, if needed. | | | | | | | | |

As shown in Table 2 above, there are three types of hardware control messages: hard reset, soft reset, and interrupt. The hard and soft reset messages assert hard and soft reset pins, respectively, of the MIA . The interrupt message generates an interrupt to the processor through the MIA interrupt logic. Hardware control messages are blocked by the Receive Hardware Message Partition register if the value in the register does not match the value in the DMA Index/Hardware Partition field in the RMB. If the control message is blocked, the reset pins are not asserted, and the interrupt is not generated. As with all messages, the RMB for a hardware control message is stored in the mailbox buffer, unless the mailbox is full or the receive logic is disabled through the MIA control register. If not blocked by the partition register a hardware control message will assert the appropriate reset pin or generate an interrupt (if not masked by the error enable register) whether or not the mailbox is full or the receive channel is enabled. The two hardware reset messages can also generate an interrupt if enabled by the Receive Error Enable register.

Whenever a hardware control message is received the Receive Hardware Message register is updated with the appropriate data. (The data is not destroyed by reset.) The lower 16 bits of the register is the address flit sent out by the sending processor node. This is address 6 in the RMB. The upper 16 bits of the register is the lower 16 bits of the Source Address field in the RMB and is used by software to show the cause of a hardware message reset. (This information is there whether or not the RMB gets written to memory.)

Mailbox messages can be received anytime, as long as the receive channel is enabled and the mailbox is not full. The receive logic is enabled by setting the Mesh Receive Enable bit in the MIA Control register. The mailbox address register is used to point to the next location in the mailbox buffer. The mailbox size register is used to determine the size of the mailbox. Both are initialized by software. If the mailbox size register is too small then no data can be written to memory. As data is written into memory the mailbox address is incremented by the cache line size and the mailbox size register is decremented by the cache line size. If the mailbox size goes below one page plus 40 bytes (1 RMB) during the message then the mailbox address next register is loaded into the mailbox address and the mailbox size next register is loaded into the mailbox size register at the end of the message, ready for the next message to go to the new buffer. Software must setup the next registers before the new buffer is full or receiving RMBs and data will be disabled. This allows the ping ponging of buffers as messages are received from the fabric.

Processing a mailbox message begins when a complete header (TRB data) has arrived and the message type is a mailbox. The data is stored in cache line blocks and sent out to the memory address defined by the mailbox address. A local copy of the mailbox address is kept during a message and is used to update the mailbox address in the register core at the end of a message. If the mailbox size is smaller that one page plus 40 bytes then data can not be put into memory. If the next mailbox is too small after the current mailbox becomes too small to receive data the receive channel will be unable to store data into memory for the next message.

Aligned and DMA write messages are handled in similar ways. Both message types read the Write Protection Array to obtain an address to store message data. The main difference is that the DMA message must first setup any writes to the receiving node and obtain a write key, whereas the Aligned message only needs to send the message and the data is stored on an Aligned address in the receiving nodes memory. The Write Protection Array is in the receiving node's memory and is controlled by the receiving node. A mask field in the WPA Address register is used to vary the size of the WPA. Using the mask it is possible to limit the area accessed by the WPA Read addresses. The size of the WPA buffer ranges from 32 KBytes to 8 MBytes. In an exemplary embodiment, the WPA buffer must be Aligned on an 8 MByte or larger boundary.

In order to send a DMA message out onto the fabric it is necessary to setup the DMA write key field and the DMA Index field in the TRB. The DMA write key must contain the sequence number received from the intended receiving node and the higher offset value (described later). The DMA Index field has the index pointer into the WPA buffer and the lower offset value. The receive logic must have the DMA enable bit set in the MIA Control register in order to receive DMA messages. If it is not set then the data is stored in the mailbox data buffer. DMA message data is stored into memory on cache line boundaries.

When a DMA write message is received, the receive logic uses the DMA Index register and the WPA Address register to create an address to read memory. This read fetches a 64-bit data entry from the WPA buffer. It contains the upper portion of the data buffer address of where to store the message data. It also contains a sequence number and a valid bit. The receive logic checks the valid bit and compares the write key sequence number received with the message with the sequence number obtained from memory. The valid bit must be set and the sequence numbers equivalent in order to store the data in the DMA data buffer. If they are not then data is stored in the mailbox data buffer.

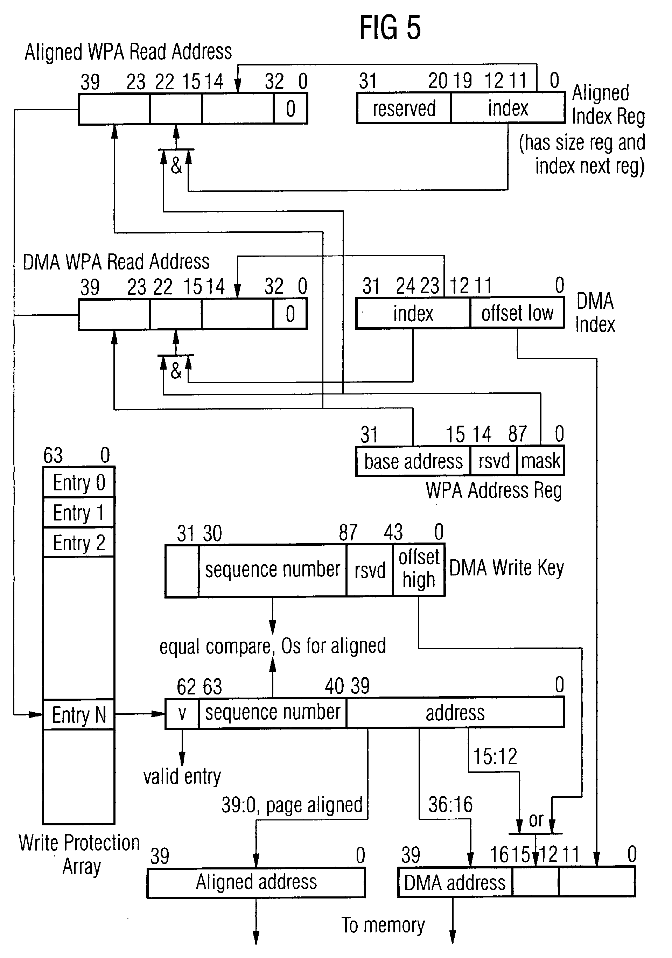

DMA operations can start at any cache line address in the page so an offset is needed. Referring to Figure 5, the DMA data buffer address is found by combining the address from the WPA entry with the upper and lower offsets contained in the DMA write key and the DMA index field. If the upper offset bits are used it is assumed the comparable bits in the WPA portion of the address are zero. One or the other of these fields should be zero. The usage is based on page size. The upper and lower offset values are used to point into the buffer. If the upper offset bits are used then address bits 15 through 12 from the WPA entry should be zero. The DMA data buffer address must be cache line Aligned. This means the low offset value in the DMA index field must be on a cache line boundary. DMA data should not cross page boundaries.

Since DMA messages are not sent without the appropriate setup between nodes, DMA messages do not have current and next addresses and sizes. The receiving node will have setup the receiving buffer before allowing a message to be sent to it.

In order to send an Aligned message out onto the fabric, the DMA write key field in the TRB is set to zero. The receive logic must have the Aligned enable bit set in the MIA Control register in order to receive Aligned messages. If it is not set then the data is stored in the mailbox data buffer.

Aligned message data is stored into memory on page Aligned boundaries. Referring to Figure 5, when an Aligned write message is received the receive logic uses the Aligned Index register and the WPA Address register to create an address to read memory. This read fetches a 64-bit data entry from the WPA buffer. It contains the entire data buffer address of where to store the message data. It also contains a sequence number and a valid bit. The receive logic checks the valid bit and compares the write key sequence number received with the message with the sequence number obtained from memory, both of which should be zero. The valid bit must be set and the sequence numbers equivalent in order to store the data in the Aligned data buffer. If they are not then data is stored in the mailbox data buffer. The Aligned data buffer address must be page size Aligned.

After each Aligned message is processed the Aligned Index register is incremented by one and the Aligned Size register is decremented by one. The Aligned Index register now points to the next entry in the WPA. If after the Aligned message has been processed the Aligned size is zero the Aligned Index and Aligned Size registers are loaded with the Aligned Index Next register and the Aligned Size Next register values, ready for the next Aligned message. An interrupt is generated and a bit is set in the RMB. Software can then setup the next registers for the next time the size reaches zero.

Both DMA messages and Aligned messages use the same base address for the WPA. (The WPA base address is contained in the WPA Address register.) The WPA may therefore be viewed as one buffer, broken up into three sections, pointed to by the DMA Index register, the Aligned Index register and the Aligned Index Next register. The WPA contains DMA message entries, current Aligned buffer entries, and next Aligned buffer entries. Only one of the Aligned buffers is being used at any time.

It will be appreciated by those of ordinary skill in the art that the invention can be embodied in other specific forms without departing from the spirit or essential character thereof. The presently disclosed embodiments are therefore considered in all respects to be illustrative and not restrictive. The scope of the invention is indicated by the appended claims rather than the foregoing description, and all changes which come within the meaning and range of equivalents thereof are intended to be embraced therein.

## Claims

1. In a parallel processing system, a method of sending a message from a first compute node to a second compute node across an interconnection network, the first and second compute nodes each having a processor and a memory, the method comprising the steps of:
the first compute node:
setting a message header field to a predetermined value;
sending the message;
the second compute node:
receiving and processing said message header;
reading a memory location in accordance with contents of a base address register and an index register;
using Direct Memory Access, storing said message in memory at a storage address determined in accordance with contents of said memory location.

2. The method of Claim 1, wherein said storage address is aligned on a memory page boundary.

3. The method of Claim 1, comprising the further step of the second compute node incrementing said index register.

4. The method of Claim 3, comprising the further step of the second compute node decrementing a size register indicative of a number of storage addresses stored in a portion of memory.

5. The method of Claim 1, comprising the further step of the second compute node, prior to storing said message, checking said contents of said memory location.

6. The method of Claim 5, wherein said contents contain a field that is compared to said message header field, said second compute means storing said message at said storage address only upon a particular comparison result.

7. The method of Claim 5, wherein said contents contain a valid bit, said second compute means storing said message at said storage address only if said valid bit indicates a valid storage address.
